# EUROPEAN PATENT SPECIFICATION

(11) **EP 3 084 779 B1**
(45) Date of publication and mention of the grant of the patent: **27.09.2017**
(21) Application number: 13814532.1
(22) Date of filing: 19.12.2013
(51) Int. Cl.: H01B 7/04

(54) **AN ARRANGEMENT FOR A DYNAMIC HIGH VOLTAGE SUBSEA CABLE AND A DYNAMIC HIGH VOLTAGE SUBSEA CABLE**
ANORDNUNG FÜR EIN UNTERSEEKABEL FÜR DYNAMISCHE HOCHSPANNUNG UND EIN UNTERSEEKABEL FÜR DYNAMISCHE HOCHSPANNUNG
AGENCEMENT POUR UN CÂBLE SOUS-MARIN À HAUTE TENSION DYNAMIQUE ET CÂBLE SOUS-MARIN À HAUTE TENSION DYNAMIQUE

(43) Date of publication of application: 26.10.2016
(73) Proprietor: NKT HV Cables GmbH, 5400 Baden (CH)
(72) Inventor: TYRBERG, Andreas, S-371 62 Lyckeby (SE); FARKAS, Andreas, S-444 41 Stenungsund (SE)
(74) Representative: Kransell & Wennborg KB
(86) International application number: PCT/EP2013/077381
(87) International publication number: WO 2015/090400

(56) References cited:
- WO-A2-2008/145691
- US-A- 4 435 613

## Description

### TECHNICAL FIELD

The present disclosure generally relates to electrical subsea equipment and in particular to an arrangement for a dynamic high voltage subsea cable and to a dynamic high voltage subsea cable comprising such an arrangement.

### BACKGROUND

Dynamic subsea cables are for example used for connecting floating oil and gas platforms to shore via a static subsea cable or to other subsea infrastructure. In the former case one end of a dynamic subsea cable is connected to a floating platform and the other end of the dynamic subsea cable is connected to a static cable, when installed. The static cable rests on the seabed, and is normally protected through trenching or rock dumping.

A dynamic cable suspended in the water between the platform and the seabed is subject to substantial mechanical stress and fatigue from the sea, wind and waves, which can introduce translation and rotation motions of the platform.

The dynamic subsea cable comprises an electrically conductive core surrounded by an electrical insulation system, which in turn is protected by a metallic sheath. The most fatigue sensitive component of a high voltage dynamic subsea cable is the metallic sheath which is used as protection against radial water penetration into the electrical insulation system, which can initiate electrical breakdown of the cable. Existing dynamic subsea cables may utilise a corrugated metal sheath. The corrugations are expected to substantially prolong the operating life of a dynamic subsea cable.

It is however not possible to install existing dynamic subsea cables at depths greater than the order of 400-600 metres without risking that the substantial hydrostatic pressure would damage the corrugated sheath. In view of this, there is a need to improve existing dynamic subsea cable designs.

A cable having a corrugated sheath is disclosed in WO2008/145691.

### SUMMARY

In view of the above, a general object of the present disclosure is to provide an arrangement for a dynamical high voltage subsea cable, which is able to withstand higher hydrostatic pressure levels than is possible today.

Another object is to provide a dynamic high voltage subsea cable comprising such an arrangement.

Hence, according to a first aspect of the present disclosure there is provided an arrangement for a dynamic high voltage subsea cable comprising: an electrically conductive core; a corrugated sheath defining a radial water barrier; an electrical insulation system arranged to insulate the electrically conductive core from the corrugated sheath, and; a liquid; wherein the electrical insulation system has an external surface and the corrugated sheath has an internal surface, and wherein the liquid is arranged between the external surface of the electrical insulation system and the internal surface of the corrugated sheath for counteracting deformation of the corrugated sheath.

With high voltage is herein meant voltages equal to or higher than 36 kV.

By means of liquid arranged between the corrugated sheath and the electrical insulation system, mechanical deformation of the corrugated sheath due to the ambient hydrostatic pressure at deep sea may be counteracted. A dynamic high voltage cable comprising such an arrangement may thereby be utilised at depths not possible with today's cable designs while maintaining the mechanical withstand strength against mechanical stress and fatigue. Such depths may be up to several thousand metres, for example 1000-4000 m, corresponding to a pressure of about 100 bar to 400 bar.

When the dynamic high voltage subsea cable comprising the arrangement has been installed, the liquid creates a pressure in the annular channel towards the internal surface of the corrugated sheath which varies with the depth of the dynamic high voltage subsea cable. In the top of the cable, there will be an atmospheric pressure, and at depth the pressure is given by the density of the liquid, times the depth, times the gravitational acceleration. This pressure will therefore be of the same order of magnitude as the hydrostatic pressure applied to the corrugated sheath.

According to one embodiment a distance between the internal surface of the corrugated sheath and the external surface of the electrical insulation system varies in the axial direction.

According to one embodiment the internal surface of the corrugated sheath is n-elliptical in any cross section of the arrangement containing the liquid, and where n is an integer depending on where the cross section is taken. With n-elliptical is meant a generalization of an ellipse with multiple foci, i.e. a multifocal ellipse; n=1, for example, is a circle, and n=2 is a classic ellipse. As stated above, the number n may vary depending on where the cross section is taken along the arrangement. Depending on whether the corrugations are helical or not, the cross section of the dynamic high voltage subsea cable is non-circular n-elliptical or essentially circular or circular. Hence, at any cross section of the arrangement containing the liquid is defined by an n-elliptical shape of the internal surface of the corrugated sheath.

According to one embodiment the external surface of the electrical insulation system is essentially circular in any cross section of the arrangement containing liquid. Hence, any cross section of the arrangement containing the liquid is defined by the essentially circular shape of the external surface of the electrical insulation system.

According to one embodiment the corrugations of the corrugated sheath are defined by peaks and valleys, wherein each peak and each valley extends around the periphery of the arrangement.

According to one embodiment the corrugated sheath is a metal sheath. A metal sheath may, compared to polymeric compounds for example, substantially prolong the lifetime of a dynamic high voltage subsea cable comprising the arrangement by preventing moisture from penetrating into the electrical insulation system.

According to one embodiment the corrugations of the corrugated sheath are helical. By means of a helical construction of the corrugated sheath the liquid may be injected in between the electrical insulation system and the corrugated sheath post corrugation of the corrugated sheath. This may be advantageous if the internal surface of the corrugated sheath partially abuts or is arranged very close to the external surface of the electrical insulation system.

According to one embodiment the electrical insulation system and the corrugated sheath are spaced apart such that the external surface of the electrical insulation system and the internal surface of the corrugated sheath define an annular channel in the axial direction of the electrically conductive core.

According to one embodiment the electrical insulation system and the corrugated sheath define the annular channel along a majority of the length of the arrangement.

According to one embodiment the liquid is a dielectric liquid.

One embodiment comprises at least one spacer arranged between the external surface of the electrical insulation system and the internal surface of the corrugated sheath.

According to one embodiment the at least one spacer is a mesh arranged around the electrical insulation system and comprising through-openings extending in the axial direction.

According to one embodiment the at least one spacer is a plurality of strands wound in a helical manner around the electrical insulation system with a spacing between each strand in the circumferential direction, or the at least one spacer is a bedding arranged around the electrical insulation system and comprising a porous material adapted to enable liquid flow in the axial direction of the arrangement.

According to a second aspect of the present disclosure there is provided a dynamic high voltage subsea cable comprising at least one arrangement according to the first aspect, wherein the at least one arrangement is arranged in an armour system and an external cable sheath.

With a dynamic high voltage subsea cable is meant a cable which is adapted to be suspended in water between a topside platform and the seabed.

According to one embodiment the dynamic high voltage subsea cable is sealed at both of its ends and each corrugated sheath defines a continuous external surface of an arrangement such that the liquid is retained within each arrangement.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically depicts an arrangement for a dynamic high voltage subsea cable installed subsea;
Fig. 2a shows a perspective view of an arrangement for a dynamic high voltage subsea cable which has a partially exposed interior;
Fig. 2b shows a cross-sectional view of the arrangement in Fig. 2a;
Fig. 3 depicts a perspective view of a dynamic high voltage subsea cable with its interior partially exposed and comprising a plurality of arrangements.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

Examples of an arrangement for a dynamic high voltage subsea cable will be presented herein. The arrangements presented herein are adapted to be suspended in water, within an external sheath thus forming a dynamic high voltage subsea cable, between a topside platform and a static subsea cable or other subsea installations such as a power transformer.

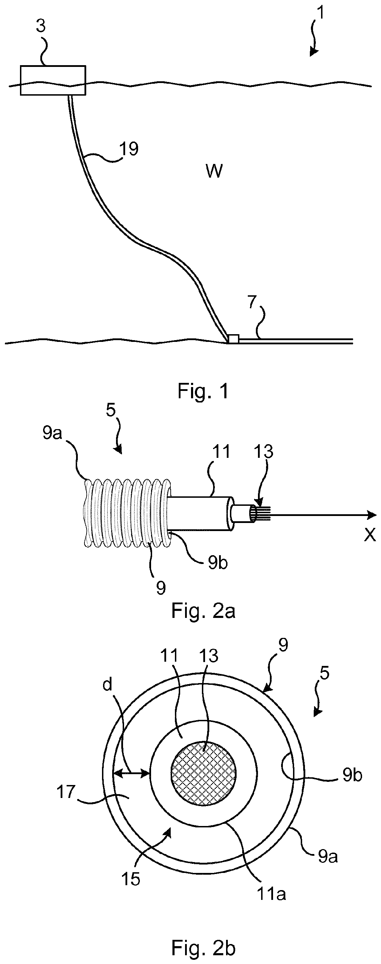

Fig. 1 schematically depicts a high voltage system 1 which comprises a topside platform 3, for example an oil and gas platform, a dynamic high voltage subsea cable 19, and a seabed installation 7. The dynamic high voltage subsea cable 19 is suspended in the water W between the platform 3 and the seabed installation 7. The seabed installation may for example be a static high voltage cable providing power from onshore to offshore, i.e. the platform 3. The dynamic high voltage subsea cable 19 may thus act as a link between the subsea installation 7 and the platform 7.

Alternatively, the subsea installation 7 could be electrical equipment such as one or more power transformers powered from the platform 3 e.g. by means of hydrocarbon fuel-driven generators, for powering drilling equipment for example.

Fig. 2a depicts a perspective view of a portion of an example of an arrangement for a dynamic high voltage subsea cable which has a partially exposed interior for the purpose of illustration. The arrangement 5 may be adapted to carry high voltage alternating current (AC) or high voltage direct current (DC).

The arrangement 5, which has a longitudinal extension and which defines a current carrying part of a dynamic high voltage subsea cable, comprises a corrugated sheath 9 which defines a radial water barrier. The corrugated sheath 9 hence prevents water from entering the arrangement 5. The corrugated sheath 9 has an external surface 9a which is corrugated, and an internal surface 9b which is corrugated. The corrugated sheath may or may not be coated with a polymeric material; in the former case the polymeric material defines the external surface of the arrangement. The corrugations of the corrugated sheath 9 are defined by peaks and valleys, wherein each peak and each valley extends around the periphery of the arrangement 5. The external surface 9a and the internal surface 9b are hence undulating in the axial direction X.

The corrugations of the corrugated sheath 9 may be helical or non-helical. The corrugated sheath 5 may be made of metal, for example copper, a copper alloy, or stainless steel. As noted above, the corrugated sheath may be coated with a polymeric material, such as polyethylene.

The arrangement 5 also comprises an electrically conductive core 13 and an electrical insulation system 11. The electrical insulation system 11 is arranged to electrically insulate the electrically conductive core 13 from the corrugated sheath 9. To this end, electrically conductive core 13 and the electrical insulation system 11 are arranged coaxially within the corrugated sheath 9. In particular, the electrical insulation system 11 surrounds the electrically conductive core 13.

The electrical insulation system 11 may for example comprise a polymeric material such as polyethylene, e.g. cross-linked polyethylene. The electrical insulation system 11 may comprise several layers, for example an inner semi-conductive layer, a polyethylene layer, and an outer semi-conductive layer.

The arrangement 5 further comprises a liquid 17. The liquid 17 counteracts deformation of the corrugated sheath 9 due to ambient hydrostatic pressure. The liquid 17 is preferably a hydrophobic liquid or any other liquid, e.g. a hydrophilic liquid, which does not diffuse into the electrical insulation system 11, or has a very slow rate of diffusion. Examples of suitable hydrophobic liquids are ester oils, mineral oils and silicon oils. The liquid may thus for example be a dielectric liquid.

According to one variation of the arrangement 5, the liquid 17 is arranged between an external surface 11a of the electrical insulation system 11 and the internal surface 9b of the corrugated sheath 9. According to one variation of the arrangement 5, only the corrugations, i.e. the radially outwards protruding portions of the corrugated sheath are spaced apart from the electrical insulation system. The corrugated sheath may thus according to one variation partially abut the electrical insulation system.

According to another variation, the external surface 11a of the electrical insulation system 11 and the internal surface 9 of the corrugated sheath 9 may be completely spaced apart. Hence, according to one variation of the arrangement 5, the electrical insulation system 11 and the corrugated sheath 9, which are arranged coaxially, are spaced apart such that an annular channel 15, as shown in Fig. 2b, is formed therebetween. The internal surface 9b and an external surface 11a of the electrical insulation system 11 are hence distanced from each other defining the annular channel 15.

In any cross section of the arrangement 5 where the annular channel 15 is defined, or alternatively, where the arrangement 5 contains the liquid 17, the external surface 11a of the electrical insulation system 11 is essentially circular. In each such cross section the periphery of the external surface 11b hence defines an essentially circular shape.

In any cross section of the arrangement 5 where the annular channel 15 is defined, or alternatively, where the arrangement contains the liquid 17, the internal surface 9b of the corrugated sheath 9 has an n-elliptical shape. The inner periphery of the corrugated sheath 9 hence defines an n-elliptical shape. This shape could be non-circular n-elliptic or circular, typically depending on whether the corrugations are helical or not.

The distance d between the internal surface 9b of the corrugated sheath 9 and the external surface 11a of the electrical insulation system 11 varies in the axial direction. In variations where the external surface of the electrical insulation system 11 and the internal surface of the corrugated sheath 9 are completely spaced apart and defining the annular channel 15 this is equivalent to a variation of the width of the annular channel 15, in the axial direction X. The distance d could also vary in the tangential direction along the periphery of each cross section, but this variation mainly depends on the particular n-elliptical shape of the internal surface 9b of the corrugated sheath 9. The distance between any two coaxial lines, one on the external surface 11a of the electrical insulation system 11 and one on the internal surface 9b of the corrugated sheath 9 varies along the axial direction X. The radial distance between the internal surface 9b and the external surface 11a of the electrical insulation system 11 is hence dependent of the location along the axial direction X.

According to one variation of the arrangement 5, the electrical insulation system 11 and the corrugated sheath 9 define the annular channel 15 along a majority of the length of the arrangement 5. For example, the annular channel may extend along essentially the entire length of the arrangement, and thus of the dynamic high voltage subsea cable comprising the arrangement. A liquid column extending along essentially the entire length of a dynamic high voltage subsea cable may thereby be obtained in the annular channel 15 when the dynamic high voltage subsea cable is suspended in water between a platform and a subsea installation. At depth h the pressure in the annular channel 15 is thus given by the density of the liquid, times the depth, times the gravitational acceleration.

Alternatively, the annular channel may extend along only that portion of the arrangement which when installed is subjected to such high hydrostatic pressure that it is necessary to provide pressure balancing by means of liquid such that the corrugated sheath is not deformed.

The coaxially arranged electrically conductive core 13 and the electrical insulation system 11 may according to one variation be freely suspended in the corrugated sheath 9, in which case the distance between the internal surface 9b of the corrugated sheath 9 and the external surface 11a of the electrical insulation system 11 may vary in each point along the axial direction X as the corrugated sheath 9 moves relative to the electrical insulation system 11. Alternatively, spacers (not shown in the Figure) may be arranged between the electrical insulation system 11 and the corrugated sheath 9, in order to fixate the distance between these two components. Such spacers may for example be distributed along the length of the arrangement 5. The spacers may be compressible in the radial direction. In particular, the compression modulus of the spacers may be lower than the compression modulus of the electrical insulation system. The spacers may have an open cellular structure which is permeable in the axial direction of the arrangement. The spacer(s) is/are advantageously semiconducting. The resistivity of the spacer(s) may for example be in the range 10-10⁶ Ohm/cm.

According to one embodiment, the spacers may be a plurality of strands which are helically arranged, in a parallel manner, around the electrical insulation system, with a spacing in-between each strand in the circumferential direction. Due to this spacing, the liquid is able to flow in the axial direction.

According to one embodiment, the arrangement may comprise spacers in the form of a mesh. The mesh forms a grid-like structure and may be arranged around the electrical insulation system, thus distancing the external surface of the electrical insulation system from the internal surface of the corrugated sheath. The mesh is hence arranged between the external surface of the electrical insulation system and the internal surface of the corrugated sheath. The mesh may advantageously be porous or permeable, especially in the axial direction of the arrangement to enable accommodation of the liquid in the annular channel. The mesh may for example have a cellular structure, with a plurality of through openings extending along the mesh in the axial direction, to enable liquid flow in the axial direction. The mesh may for example comprise a polymeric material. In particular, the mesh may be made of a polyolefin, such as polyethylene.

According to one embodiment, the arrangement may comprise spacers in the form of a bedding. The bedding may for example be a porous tape wound around the electrical insulation system. The tape may be wound in an overlapping manner, leaving no external surface of the electrical insulation system exposed, or alternatively, it could be wound with a distance between turns in the axial direction. The porous characteristics of the tape enable the liquid to flow in the axial direction, and it allows liquid to be arranged between the electrical insulation system and the corrugated sheath. According to one variation, the bedding may be a tape which has a width corresponding essentially to the dimension of the circumference of the electrical insulation system. The tape may be folded around the electrical insulation system, to thereby cover the electrical insulation system, and form a spacer for distancing the external surface of the electrical insulation system from the internal surface of the corrugated sheath. The tape may be made of a porous material to enable the liquid to flow through the tape and to be contained within the space between the electrical insulation system and the corrugated sheath.

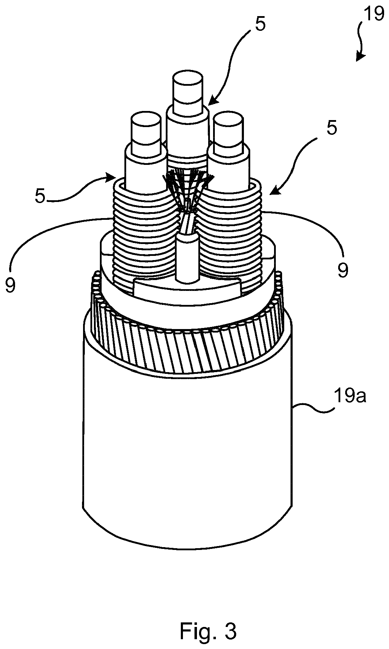

As shown in Fig. 3, a plurality of arrangements 5 may be arranged in a bundle to form a dynamic high voltage subsea cable 19. The arrangements 5 are arranged in an armour system and external cable sheath 19a. The number of arrangements 5 contained in a dynamic high voltage subsea cable 19 is typically equal to the number of electrical phases in case of an AC cable. The armour system reinforces the external cable sheath 19a, and may comprise a plurality of metal wires, e.g. steel wires, as illustrated in Fig. 3.

It should be noted that a dynamic high voltage subsea cable could comprise a single arrangement 5 in the case of DC applications.

According to one variation the dynamic high voltage subsea cable 19 is sealed at both of its ends. Moreover, each corrugated sheath 9 defines a continuous external surface of the arrangement 5 with which that corrugated sheath is associated, such that the liquid is retained between the external surface of the electrical insulation system and the internal surface of the corrugated sheath, e.g. in the annular channel 15. There are hence no openings in the corrugated sheath or at the ends of the dynamic high voltage subsea cable according to this variation, or at least no openings in fluid communication with any space between the external surface of the electrical insulation system and internal surface of the corrugated sheath.

According to one variation, one end of the dynamic high voltage subsea cable may be provided with a fluid reservoir in fluid communication with the space(s) between the external surface of the electrical insulation system and the internal surface of the corrugated sheath, e.g. the annular channel(s). Preferably this end is the top end of the dynamic high voltage subsea cable when it has been installed. By having a fluid reservoir in the top of the cable, pressure increase due to thermal expansion of the liquid and insulation during cable heating can be accommodated without increasing the pressure inside the corrugated sheath.

When manufacturing the arrangement, the corrugations of the corrugated sheath could either be done prior to filling the annular channel with a liquid or after the annular channel has been filled with liquid. If the corrugations of the corrugated sheath are helical, the corrugation of the sheath is typically performed before filling with liquid. The liquid can then be distributed along the length of the arrangement by flowing through the helical channel structure. Another possibility is to arrange a smooth-surfaced sheath around the electrical insulation system, and the spacers in variations comprising spacers, and filling the annular channel with liquid. The sheath may then be corrugated post-injection to obtain a corrugated sheath.

It is envisaged that the arrangement and dynamic high voltage subsea cable presented herein find applications within the oil and gas industry for example for subsea HVDC/HVAC power transmission and power distribution systems, as well as offshore power generation such as wind energy, tidal energy, wave energy, and ocean current energy.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An arrangement (5) for a dynamic high voltage subsea cable (19) comprising:
an electrically conductive core (13),
a corrugated sheath (9) defining a radial water barrier,
an electrical insulation system (11) arranged to insulate the electrically conductive core (13) from the corrugated sheath (9), and
a liquid (17),
wherein the electrical insulation system (11) has an external surface (11a) and the corrugated sheath (9) has an internal surface (9b), and wherein the liquid (17) is arranged between the external surface (11a) of the electrical insulation system (11) and the internal surface (9b) of corrugated sheath (9) for counteracting deformation of the corrugated sheath (9).

2. The arrangement (5) as claimed in claim 1, wherein a distance (d) between the internal surface (9b) of the corrugated sheath (9) and the external surface (11a) of the electrical insulation system (11) varies in the axial direction (X).

3. The arrangement (5) as claimed in claim 1 or 2, wherein the internal surface (9b) of the corrugated sheath (9) is n-elliptical in any cross section of the arrangement (5) containing the liquid (17), and where n is an integer depending on where the cross section is taken.

4. The arrangement (5) as claimed in any of the preceding claims, wherein the external surface (11a) of the electrical insulation system (11) is essentially circular in any cross section of the arrangement (5) containing the liquid (17).

5. The arrangement (5) as claimed in any of the preceding claims, wherein the corrugations of the corrugated sheath (9) are defined by peaks and valleys, wherein each peak and each valley extends around the periphery of the arrangement (5).

6. The arrangement (5) as claimed in any of the preceding claims, wherein the corrugated sheath (9) is a metal sheath.

7. The arrangement (5) as claimed in any of the preceding claims, wherein the corrugations of the corrugated sheath (9) are helical.

8. The arrangement (5) as claimed in any of the preceding claims, wherein the electrical insulation system (11) and the corrugated sheath (9) are spaced apart such that the external surface (11a) of the electrical insulation system (11) and the internal surface (9b) of the corrugated sheath (9) define an annular channel (15) in the axial direction (X) of the electrically conductive core (13).

9. The arrangement (5) as claimed in claim 8, wherein the electrical insulation system (11) and the corrugated sheath (9) define the annular channel (15) along a majority of the length of the arrangement (5).

10. The arrangement (5) as claimed in any of the preceding claims, wherein the liquid (17) is a dielectric liquid.

11. The arrangement (5) as claimed in any of the preceding claims, comprising at least one spacer arranged between the external surface (11a) of the electrical insulation system (11) and the internal surface (9b) of the corrugated sheath (9).

12. The arrangement (5) as claimed in claim 11, wherein the at least one spacer is a mesh arranged around the electrical insulation system (11) and comprising through-openings extending in the axial direction.

13. The arrangement (5) as claimed in claim 11, wherein the at least one spacer is a plurality of strands wound in a helical manner around the electrical insulation system (11) with a spacing between each strand in the circumferential direction, or the at least one spacer is a bedding arranged around the electrical insulation system (11) and comprising a porous material adapted to enable liquid flow in the axial direction of the arrangement (5).

14. A dynamic high voltage subsea cable (19) comprising at least one arrangement (5) as claimed in any of claims 1-13, wherein the at least one arrangement (5) is arranged in an armour system and an external cable sheath (19a).

15. The dynamic high voltage subsea cable (5) as claimed in claim 14, wherein the dynamic high voltage subsea cable (5) is sealed at both of its ends and each corrugated sheath (9) defines a continuous external surface of an arrangement (5) such that the liquid (17) is retained within each arrangement (5).

## Patentansprüche

1. Anordnung (5) für ein dynamisches Hochspannungs-Seekabel (19), umfassend:
einen elektrisch leitfähigen Kern (13),
eine gewellte Hülle (9), die eine radiale Wassersperre definiert,
ein elektrisches Isoliersystem (11), das dafür ausgelegt ist, den elektrisch leitfähigen Kern (13) von der gewellten Hülle (9) zu isolieren, und
eine Flüssigkeit (17),
wobei das elektrische Isoliersystem (11) eine externe Oberfläche (11a) hat und die gewellte Hülle (9) eine interne Oberfläche (9b) hat, und wobei die Flüssigkeit (17) zwischen der externen Oberfläche (11a) des elektrischen Isoliersystems (11) und der internen Oberfläche (9b) der gewellten Hülle (9) zum Entgegenwirken gegen die Deformation der gewellten Hülle (9) angeordnet ist.

2. Anordnung (5) nach Anspruch 1, wobei ein Abstand (d) zwischen der internen Oberfläche (9b) der gewellten Hülle (9) und der externen Oberfläche (11a) des elektrischen Isoliersystems (11) in der axialen Richtung (X) variiert.

3. Anordnung (5) nach Anspruch 1 oder 2, wobei die interne Oberfläche (9b) der gewellten Hülle (9) n-elliptisch in einem Querschnitt der Anordnung (5) ist, der die Flüssigkeit (17) enthält, und wobei n eine ganze Zahl ist, die davon abhängt, wo der Querschnitt gewonnen wird.

4. Anordnung (5) nach einem der vorhergehenden Ansprüche, wobei die externe Oberfläche (11a) des elektrischen Isoliersystems (11) im Wesentlichen kreisförmig in einem beliebigen Querschnitt der Anordnung (5) ist, der die Flüssigkeit (17) enthält.

5. Anordnung (5) nach einem der vorhergehenden Ansprüche, wobei die Wellungen der gewellten Hülle (9) durch Maxima und Minima definiert sind, wobei jedes Maximum und jedes Minimum sich rund um den Umfang der Anordnung (5) erstreckt.

6. Anordnung (5) nach einem der vorhergehenden Ansprüche, wobei die gewellte Hülle (9) eine Metallhülle ist.

7. Anordnung (5) nach einem der vorhergehenden Ansprüche, wobei die Wellungen der gewellten Hülle (9) schraubenförmig sind.

8. Anordnung (5) nach einem der vorhergehenden Ansprüche, wobei das elektrische Isoliersystem (11) und die gewellte Hülle (9) räumlich so getrennt sind, dass die externe Oberfläche (11a) des elektrischen Isoliersystems (11) und die interne Oberfläche (9b) der gewellten Hülle (9) einen ringförmigen Kanal (15) in der axialen Richtung (X) des elektrisch leitfähigen Kerns (13) definieren.

9. Anordnung (5) nach Anspruch 8, wobei das elektrische Isoliersystem (11) und die gewellte Hülle (9) den ringförmigen Kanal (15) entlang eines großen Teils der Länge der Anordnung (5) definieren.

10. Anordnung (5) nach einem der vorhergehenden Ansprüche, wobei die Flüssigkeit (17) eine dielektrische Flüssigkeit ist.

11. Anordnung (5) nach einem der vorhergehenden Ansprüche, die mindestens einen Abstandshalter umfasst, der zwischen der externen Oberfläche (11a) des elektrischen Isoliersystems (11) und der internen Oberfläche (9b) der gewellten Hülle (9) angeordnet ist.

12. Anordnung (5) nach Anspruch 11, wobei der mindestens eine Abstandshalter ein Netz ist, das rund um das elektrische Isoliersystem (11) angeordnet ist und Durchgangsöffnungen umfasst, die sich in axialer Richtung erstrecken.

13. Anordnung (5) nach Anspruch 11, wobei der mindestens eine Abstandshalter aus mehreren Strängen besteht, die in einer schraubenförmigen Weise um das elektrische Isoliersystem (11) gewunden sind, mit einem Abstand zwischen jedem Strang in Umfangsrichtung, oder der mindestens eine Abstandshalter ist eine Bettung, die rund um das elektrische Isoliersystem (11) angeordnet ist und ein poröses Material umfasst, das in der Lage ist, einen Flüssigkeitsstrom in axialer Richtung der Anordnung (5) zu ermöglichen.

14. Dynamisches Hochspannungs-Seekabel (19), das mindestens eine Anordnung (5) nach einem der Ansprüche 1 - 13 umfasst, wobei die mindestens eine Anordnung (5) in einem Armierungssystem und einer externen Kabelhülle (19a) angeordnet ist.

15. Dynamisches Hochspannungs-Seekabel (5) nach Anspruch 14, wobei das dynamische Hochspannungs-Seekabel (5) an beiden Enden abgedichtet ist und jede gewellte Hülle (9) eine durchgehende externe Oberfläche einer Anordnung (5) derart definiert, dass die Flüssigkeit (17) innerhalb jeder Anordnung (5) gehalten wird.

## Revendications

1. Agencement (5) pour câble sous-marin à haute tension dynamique (19) comprenant :
un noyau électroconducteur (13),
une gaine ondulée (9) définissant une barrière imperméable radiale,
un système d'isolation électrique (11) agencé pour isoler le noyau électroconducteur (13) de la gaine ondulée (9), et
un liquide (17),
dans lequel le système d'isolation électrique (11) présente une surface externe (11a) et la gaine ondulée (9) présente une surface interne (9b), et dans lequel le liquide (17) est agencé entre la surface externe (11a) du système d'isolation électrique (11) et la surface interne (9b) de la gaine ondulée (9) pour contrecarrer une déformation de la gaine ondulée (9).

2. Agencement (5) selon la revendication 1, dans lequel la distance (d) entre la surface interne (9b) de la gaine ondulée (9) et la surface externe (11a) du système d'isolation électrique (11) varie en direction axiale (X).

3. Agencement (5) selon la revendication 1 ou 2, dans lequel la surface interne (9b) de la gaine ondulée (9) est elliptique à n foyers dans toute section transversale de l'agencement (5) contenant le liquide (17), et où n est en entier dépendant de l'endroit où la section transversale est réalisée.

4. Agencement (5) selon l'une quelconque des revendications précédentes, dans lequel la surface externe (11a) du système d'isolation électrique (11) est essentiellement circulaire dans toute section transversale de l'agencement (5) contenant le liquide (17).

5. Agencement (5) selon l'une quelconque des revendications précédentes, dans lequel les ondulations de la gaine ondulée (9) sont définies par des pics et des creux, dans lequel chaque pic et chaque creux s'étendent autour de la périphérie de l'agencement (5).

6. Agencement (5) selon l'une quelconque des revendications précédentes, dans lequel la gaine ondulée (9) est une gaine métallique.

7. Agencement (5) selon l'une quelconque des revendications précédentes, dans lequel les ondulations de la gaine ondulée (9) sont hélicoïdales.

8. Agencement (5) selon l'une quelconque des revendications précédentes, dans lequel le système d'isolation électrique (11) et la gaine ondulée (9) sont espacés de telle sorte que la surface externe (11a) du système d'isolation électrique (11) et la surface interne (9b) de la gaine ondulée (9) définissent un canal annulaire (15) en direction axiale (X) du noyau électroconducteur (13).

9. Agencement (5) selon la revendication 8, dans lequel le système d'isolation électrique (11) et la gaine ondulée (9) définissent le canal annulaire (15) sur la plus grande partie de la longueur de l'agencement (5).

10. Agencement (5) selon l'une quelconque des revendications précédentes, dans lequel le liquide (17) est un liquide diélectrique.

11. Agencement (5) selon l'une quelconque des revendications précédentes, comprenant au moins une entretoise agencée entre la surface externe (11a) du système d'isolation électrique (11) et la surface interne (9b) de la gaine ondulée (9).

12. Agencement (5) selon la revendication 11, dans lequel ladite au moins une entretoise est une maille agencée autour du système d'isolation électrique (11) et comprenant des orifices qui s'étendent en direction axiale.

13. Agencement (5) selon la revendication 11, dans lequel ladite au moins une entretoise est constituée par une pluralité de brins enroulés de manière hélicoïdale autour du système d'isolation électrique (11) avec un espacement en direction circonférentielle entre tous les brins respectifs, ou dans lequel ladite au moins une entretoise est un lit de pose agencé autour du système d'isolation électrique (11) et comprenant un matériau poreux adapté pour permettre l'écoulement d'un liquide en direction axiale de l'agencement (5).

14. Câble sous-marin à haute tension dynamique (19) comprenant au moins un agencement (5) selon l'une quelconque des revendications 1 - 13, dans lequel ledit au moins un agencement (5) est agencé dans un système de blindage et une gaine de câble externe (19a).

15. Câble sous-marin à haute tension dynamique (5) selon la revendication 14, dans lequel le câble sous-marin à haute tension dynamique (5) est scellé à ses deux extrémités et chaque gaine ondulée (9) définit une surface externe continue d'un agencement (5) tel que le liquide (17) est retenu dans chaque agencement (5).
